# EUROPEAN PATENT SPECIFICATION

(11) **EP 4 370 897 B1**
(45) Date of publication and mention of the grant of the patent: **29.04.2026**
(21) Application number: 22734625.1
(22) Date of filing: 23.06.2022
(51) Int. Cl.: G01N 3/60, G01N 3/32, G01N 3/08

(54) **FATIGUE EVALUATION IN FIBRE SAMPLE**
ERMÜDUNGSBEWERTUNG IN EINER FASERPROBE
ÉVALUATION DE FATIGUE DANS UN ÉCHANTILLON DE FIBRES

(30) Priority: 16.07.2021 EP 21186193
(43) Date of publication of application: 22.05.2024
(73) Proprietor: Unilever IP Holdings B.V., 6708 WH Wageningen (NL); Unilever Global IP Limited, Wirral, Merseyside CH62 4ZD (GB)
(72) Inventor: LEE, Kenneth, Stuart, 6708 WH Wageningen (NL)
(74) Representative: Unilever Patent Group
(86) International application number: PCT/EP2022/067230
(87) International publication number: WO 2023/285103

(56) References cited:
- US-A1- 2020 209 126
- EVANS TREFOR A: "Purchased for the Fatigue testing of hair-A statistical approach to hair breakage", J. COSMET. SCI, 1 November 2009 (2009-11-01), pages 599 - 616, XP055872438, Retrieved from the Internet <URL:https://library.scconline.org/v060n06/> [retrieved on 20211213]
- MACHA E ET AL: "Energy criteria of multiaxial fatigue failure", FATIGUE & FRACTURE OF ENGINEERING MATERIALS & STRUCTURES (, 1 January 1999 (1999-01-01), pages 1053 - 1070, XP055872532, Retrieved from the Internet <URL:https://onlinelibrary.wiley.com/doi/pdfdirect/10.1046/j.1460-2695.1999.00220.x> [retrieved on 20211213]
- GOLOS ET AL: "The fatigue criterion with mean stress effect on failure", MATERIALS SCIENCE, ELSEVIER, AMSTERDAM, NL, vol. 111, 1 May 1989 (1989-05-01), pages 63 - 69, XP024166685, ISSN: 0921-5093, [retrieved on 19890501], DOI: 10.1016/0921-5093(89)90198-6
- TAO ET AL: "Mean stress/strain effect on fatigue behavior of an epoxy resin", INTERNATIONAL JOURNAL OF FATIGUE, ELSEVIER, AMSTERDAM, NL, vol. 29, no. 12, 25 October 2007 (2007-10-25), pages 2180 - 2190, XP022314345, ISSN: 0142-1123, DOI: 10.1016/J.IJFATIGUE.2006.12.009

## Description

### Field of the invention

The disclosure relates to a method, and associated computer program code and apparatus, for evaluating fatigue in a fibre sample. In particular, the method may relate to evaluating fatigue in a human hair sample.

### Background of the invention

Mechanical testing, and in particular tensile testing and fatigue analysis, are used in a wide variety of industries to analyse the properties of products and materials to allow engineers to improve designs and chemical formulations.

In the fast moving consumer goods space, in developing hair care products, the effect of the product on the properties of hair fibres needs to be tested so that the effect of the product as a chemical treatment can be assessed and compared with that of existing formulations. Typically, such analysis may be performed by comparing mechanical properties of fibres with and without the product treatment being applied. A common mechanical parameter used for these comparisons is Young's modulus. This can be measured using a simple tensile test (measuring force vs strain, or stress vs strain). In some examples, the tensile test is repeated for approximately 50 fibres of each type (treated vs untreated). This type of test may be referred to as the 'classical tensile test'. The overall experiment is relatively rapid and can be used to screen formulations to determine their effectiveness in affecting the physical properties of the fibre samples in a desired way.

However, fibre fatigue experiments are more relevant to the performance of some materials, including human hair, in real world conditions than stress/strain measurements. In some examples, fatigue measurements may be taken by repeatedly cycling straining and recovery for a sample. In hair care product testing, such analysis is more representative of the mechanical insult that hair fibres receive during grooming than classical tensile testing. Typically, this cyclic process may be repeated until the fibre breaks. This type of test may be referred to as 'single fibre fatigue testing'. The average number of 'cycles to break' can be recorded for a number of fibres (for example 30 or 50 fibres, or more). It is also reported in the literature that differences between hair types may be much larger in fatigue measurements than in conventional measurements.

However, it is not currently feasible to use fatigue measurements to screen active compositions because statistically significant fatigue analysis is very time consuming. A limiting factor is the need to perform repeat measurements (many thousands of cycles) on each of a plurality of fibres until fibre failure. As an example, for a study involving 30 fibres, the whole experiment can take many weeks.

TREFOR A. EVANS discloses "Fatigue testing of hair-A statistical approach to hair breakage" in J. Cos met, Sri., 60, 599-616 (November/December 2009).

It may be possible to speed up fibre breakage by changing experimental parameters. This could include changing the amount of stress, force or strain used in the experiment. Similarly, the humidity or other environmental parameters at which the experiment is conducted can be adjusted to affect the number of cycles required to break the fibre. However, changing these physical parameters significantly may cause the testing to deviate substantially from real-world consumer-relevant conditions, and so reduce the probative value of the assessment.

Some aspects of the present disclosure are directed to ways of speeding up hair fibre fatigue measurements within the desired consumer relevant conditions so that the screening of formulations is practicable.

Other aspects of the disclosure relate to identifying the initial physical properties of the fibre sample under test.

### Summary of the invention

The invention is set out in the appended claims.

According to an embodiment of the disclosure, there is provided a method of evaluating fatigue in one or more fibre samples, comprising:
receiving fatigue testing data for the fibre sample for a plurality of loading cycles;
determining, for at least a subset of the cycles, a loading energy based on data from the fatigue testing;
determining an indication of fatigue based on the loading energy of the at least a subset of the cycles.

The fatigue testing may be single fibre fatigue testing.

In one or more embodiments, determining an indication of rate of fatigue comprises determining a rate of change of the loading energy with respect to the number of cycles.

In one or more embodiments, the rate of change of the loading energy is based on smoothed values of the loading energy for the plurality of cycles.

In one or more embodiments, the indication of rate of fatigue is determined based on initial loading cycles.

In one or more embodiments, the plurality of cycles of fatigue testing data comprises fewer than one of: 10000, 20000 or 50000 cycles.

In one or more embodiments, the method further comprises determining an indication of initial condition of the fibre sample based on a number of maxima in the loading energy with respect to the number of cycles.

In one or more embodiments, the fatigue testing data comprises force or stress against displacement or strain data. As a further alternative to the use of force or tensile displacement, the fatigue testing data may comprise bending or torsional force or stress as a function of displacement or strain.

In one or more embodiments, the loading energy of a cycle is determined by integrating force or / stress over displacement or/ strain for the loading portion of that cycle.

In one or more embodiments, the loading energy of a cycle is determined by integrating force or stress over displacement or strain within the loading/unloading hysteresis of that cycle. The method may be a computer-implemented method.

In one or more embodiments, determining the indication of fatigue based on the loading energy of a cycle comprises determining by integrating force or stress over displacement or strain of the loading part of that cycle.

In one or more embodiments, determining the indication of fatigue further comprises integrating force or stress over displacement or strain of the unloading part of that cycle to determine the energy lost within that cycle.

In one or more embodiments, the method further comprises halting an automated testing schedule for a sample in response to determining that the indication of fatigue meets a pre-determined value.

In one or more embodiments, the one or more fibre sample comprise human or animal hair fibres.

In one or more embodiments, the method further comprises performing the fatigue testing for the plurality of loading cycles, which may be performed as an automated testing schedule.

According to a further embodiment of the disclosure, there is provided a method comprising:
receiving fatigue testing data for the fibre sample for a plurality of loading cycles;
determining, for at least a subset of the cycles, a loading energy based on data from the fatigue testing;
determining an indication of an initial condition of the fibre based features of the loading energy as a function of the number of cycles.

According to another aspect, the disclosure provides a computer program, distributable by electronic data transmission, comprising computer program code means adapted, when said program is loaded onto a computer, to make the computer execute the procedure of any of the methods described herein, or a computer program product, comprising a computer readable medium having thereon computer program code means adapted, when said program is loaded onto a computer, to make the computer execute the procedure of any one of methods described herein.

According to a further embodiment of the disclosure, there is provided a fatigue testing apparatus comprising a controller configured to, when in use, perform one or more of the methods described herein.

### Brief Description of the Drawings

One or more embodiments will now be described by way of example only with reference to the accompanying drawings in which:
Figure 1 shows a method of evaluating fatigue in a fibre sample;
Figure 2 shows a plot of force-strain hysteresis curve for a fibre loading cycle;
Figure 3 shows a plot of measured loading energy as a function of cycle number;
Figure 4 shows a plot of measured loading energy as a function of cycle number for a sample with significantly more partial breakage points than that in Figure 3; and
Figure 5 shows results of a 'cycles to break' experiment comparing virgin hair samples and hair samples that have been heat treated;
Figures 6A to 6C shows results of applying the analysis method described previously with reference to Figures 1 to 4 comparing virgin hair samples and hair samples that have been heat treated;
Figure 7 shows a schematic block diagram of a system for performing a method of evaluating fatigue in a fibre sample; and
Figure 8 shows a computer readable medium comprising computer program code.

### Detailed description of the invention

The present disclosure relates to improved method of determining fatigue in a fibre sample. In some cases, the fibre samples may comprise human or animal hair fibres to allow for the efficient comparative testing of damage treatments, such as heat treatments, or chemical treatments, such as different shampoos or other consumer product formulations. Alternatively, the fibre samples may comprise synthetic or natural fibres.

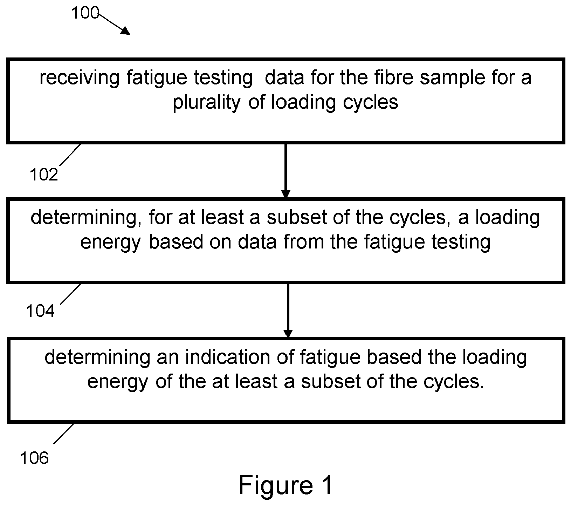

Figure 1 outlines an example method 100 for evaluating fatigue in a fibre sample. The method comprises receiving 102 fatigue testing data for the fibre sample for a plurality of loading cycles. The fatigue testing data may comprise force or stress against displacement or strain data. In some examples, the method can include performing the fatigue testing to obtain the fatigue testing data, and it will be appreciated that in practice the testing may be performed for a plurality of different samples in various conditions to allow a comparison between the performance of one or more products.

For at least a subset of the cycles, a loading energy is determined 104 based on data from the fatigue testing.

An indication of fatigue is then determined 106 based on the loading energy of the at least a subset of the cycles.

The claimed method 100 provides a way of predicting fibre breakage during the experiment without having to wait for the actual breakage event to occur. This can allow for improved efficiency when assessing the effectiveness of various treatment formulations and can allow for many more formulations to be screened in a given period of time. In particular, it has been found that the use of loading energy provides a predictive factor that allows a useful comparison of fatigue performance to be made between fibre samples without the need to test the fibre samples to failure. The fatigue testing data described herein therefore does not necessarily include testing to failure for the fibre samples.

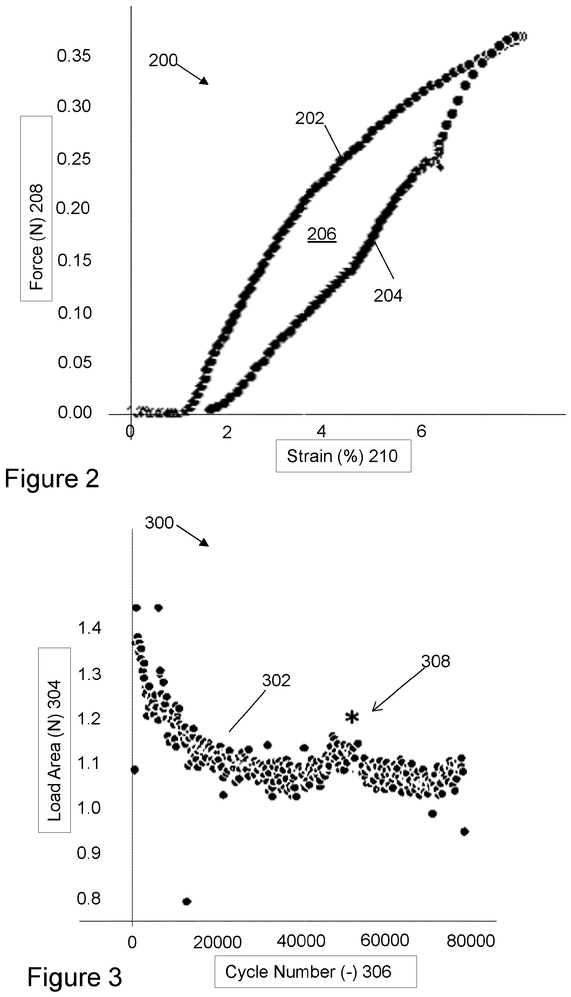

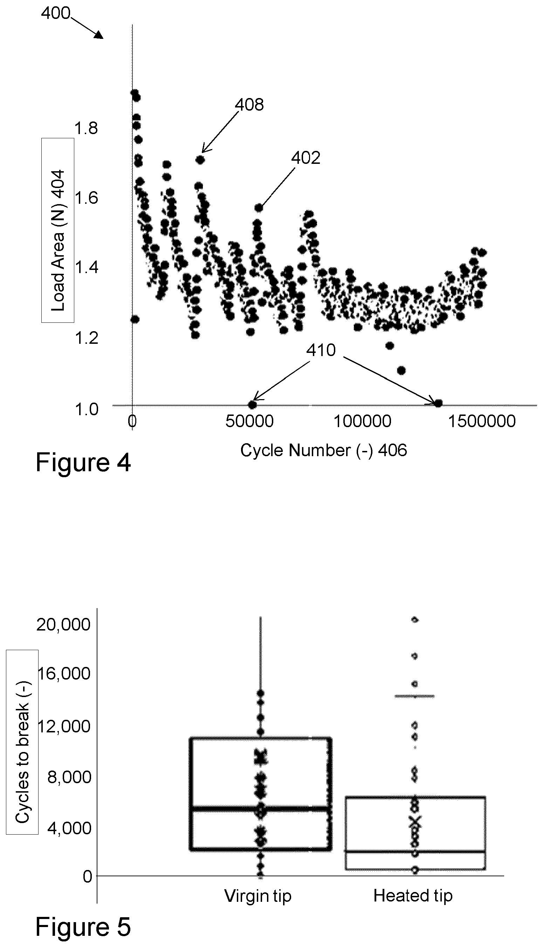

Various aspects of the method, including the determination of indications of fatigue, are discussed in further detail below with reference to Figures 2 to 4. In particular, a first indicator of fatigue is described with reference to Figure 3 and a second indicator of fatigue is described with reference to Figure 4.

As will be appreciated from the discussion below, various aspects of the method allow the evolution of a specific parameter that changes with the number of fatigue cycles applied to be studied. In some examples, the result for each set of samples may be correlated with the conventional fatigue measurement metric of the number of cycles to breakage.

Figure 2 shows an example force-strain hysteresis curve of a loading cycle 200 for a single loading cycle. The X-axis shows the strain 210 experienced by the fibre sample and the Y-axis represents the force 208 exerted on the sample. Alternatively, the Y axis could show the stress and the X-axis the strain and yield a similar result. The force applied to the fibre sample induces the stress in the material under test. The data captured for the selected cycle includes a complete loading part 202 (upper curve) of the cycle 200 and complete unloading 204 part (lower curve) of the cycle 200 for the sample. The experiments were carried out using extension to a pre-determined stress. The loading part of the cycle ends when this stress is reached. Other implementations of the experiment could use a fixed force or a fixed strain.

The area under the force/strain loading part 202 of the cycle 200 provides a measure of the loading energy. The loading energy of a given cycle may be determined by integrating the force/stress over displacement/strain for the loading portion 202 of that cycle. The loading energy changes with the number of loading cycles that are applied to the fibre sample. The loading energy parameter can be used to determine the number of cycles required for the fibre sample to break. Monitoring the loading energy can therefore be used to provide a predictable assessment of the fatigue of the fibre sample. For example, while the analysis does not necessarily allow a prediction of breakage to be performed on a fibre-by-fibre basis, a comparison of the fatigue performance can be made between fibre samples based on the determined values. Fibre samples in which the magnitude of the rate of change of loading energy with respect to cycle number is greater indicate a higher rate of fatigue than fibre samples in which the rate of change is lower.

The fatigue testing data can be acquired using existing commercially available instruments using standard data acquisition parameters and techniques. The fatigue data may be obtained using a Dia-Stron CYC801. In a conventional experiment only the number of cycles to break is recorded. Whereas, in the disclosed method, a loading energy is determined based on data from the fatigue testing for at least a subset of the cycles. In the illustrated data, the force/strain curves are recorded during selected cycles (every 200^{th} cycle in this example) of the fatigue experiment.

The area 206 between the loading part 202 and the unloading part 204 indicates the amount of the energy lost during the loading cycle 200. The lost energy indicated by area 206 is equivalent to the area under the loading curve 202 (loading energy) minus the area under the unloading curve 204 (unloading energy).

Additional parameters derived from the loading energy may also be used to determine an indication of fatigue. Using the area under the loading part 202 of the cycle 200, or the area under the unloading part 204 of the cycle 200 or the area 206 within the hysteresis curve, the energy lost through the fibre sample during that cycle can be determined. The energy lost in the cycle can be used as a parameter to give a predictive indication of fibre breakage. More particularly, the changes to the shape of the loading part 202 of the cycle 200, the unloading part 202 of the cycle 200 and the area 206 within the hysteresis curve determined for each of the selected cycles can allow for an indicator of the likelihood of fibre breakage, or fatigue, to be determined.

A first aspect of the method of determining an indicator of fatigue is discussed below with respect to Figure 3.

Figure 3 shows a time series profile 300 including selected data samples 302 for a physical specimen (or fibre sample). The profile 300 shows load area 304 against cycle number 306 for each selected sample 302. Each point in Figure 3 represents the loading energy for a selected cycle, which may be determined for each point using the measurement described previously with reference to Figure 2, for example. Alternatively, each point may correspond to a parameter derived from the loading energy, such as the energy lost during a cycle (loading energy minus unloading energy).

It has been found that fatigue is demonstrated by changes in the loading curve over a number of loading cycles. It will be appreciated that the term loading cycle takes its conventional meaning when used herein: a cycle in which a load is applied and removed. The evolution of the area under the loading curve can therefore be used as a predictive parameter for failure, and as an indicator of fatigue. The trends of the data in Figure 3 can be used to provide an indication/prediction of the fibre breakage before the complete breakage of the fibre is experienced. For example, as shown in Figure 3, initially, the loading energy (as indicated by the loading area 304) decreases as the number of cycles 306 increases. In particular the loading energy decreases as the log of the number of cycles 306.

As the number of cycles 306 is increased, the fibres are weakened and as such the amount of energy lost during each cycle (i.e., the load area 304 under the loading curve) also decreases. This can be considered as the fibre sample becoming easier to deform by the applied force.

The indication of the rate of fatigue may comprise determining a rate of change of the loading energy with respect to the number of cycles. In particular, it has been found that the initial slope of the loading energy with respect to the number of cycles may provide a useful indicator of fatigue. The indication of the rate of fatigue may be determined based on initial loading cycles. This may be determined by comparing the energy lost in relation to the initial state of the fibre samples, for example, when the load area has reduced by a threshold level, such as 10% or 20%. Alternatively, the initial loading cycles may include a fixed number of cycles, such as 5,000, 10,000, 20,000 or 50,000 cycles, for example. As a further alternative, the number of loading cycles to provide the initial loading cycles may be based on determining when the rate of change of the initial slope of the loading energy with respect to the number of cycles reaches a threshold value.

The rate of change of the loading energy may be based on smoothed values of the loading energy 304 for the plurality of cycles 306. The application of a conventional smoothing function is useful to remove sample-to-sample variation and improve the conformity of a rate of change calculated based on the smoothed function with the overall trend. That is, a first derivative of the smoothed data provides an effective rate of decrease of the load area vs cycle number.

As shown in Figure 3, the data also contains an unexpected bump 308 in the curve. These bumps are understood to correspond to partial breakage events of the fibre.

In order to be able to predict fibre failure using the collected data, it is preferable to consider the temporal evolution of the area under the loading curve without interference from the partial breakage events. The outliers, or data samples affected by partial breakage events, may be filtered out using conventional techniques such as determining when the load area for a sample is greater than that of a proceeding sample (or group of data samples) by a threshold level. Alternatively, the outliers may be filtered by detecting local maxima in the data and excluding those data samples.

It has been found that by taking the mode of the first derivative for the data, the analysis also may be less influenced by the spikes associated with the small/partial breakage events. Other averages can also be used, however additional signal processing may be necessary to remove the effect of the partial breakages.

In this way, the first derivative of the initial section of the data shown in Figure 3 may be considered to provide the indication of fatigue for the fibre sample undergoing testing according to the first aspect of the method. Such a method has been found to identify differences between fibre samples that have received different treatments (for example, untreated hair fibre verses heat treated hair fibre) after the 50^{th} data sampling point, which corresponds to the 10000^{th} cycle when the data is captured for every 200^{th} cycle (i.e., 50*200 cycles). Therefore, to compare two treatments, only 20000 cycles are needed in total. That is, only the initial section of the data for the first 10000 cycles for each of the two samples is considered in this example. This is approximately an order of magnitude fewer than the number required cycles using a test-to-failure method. The use of the method described above therefore allows for significant improvements in sample testing and can allow for more treatments to be tested efficiently or the same treatments to be tested numerous times to validate results, for example.

The first differential has been found to provide a substantially improved indicator of fatigue compared to a number of other candidate metrics, including time series analysis (SARIMAX), log/linear fitting, autocorrelation in conjunction with taking various integrals and derivatives of log/linear data.

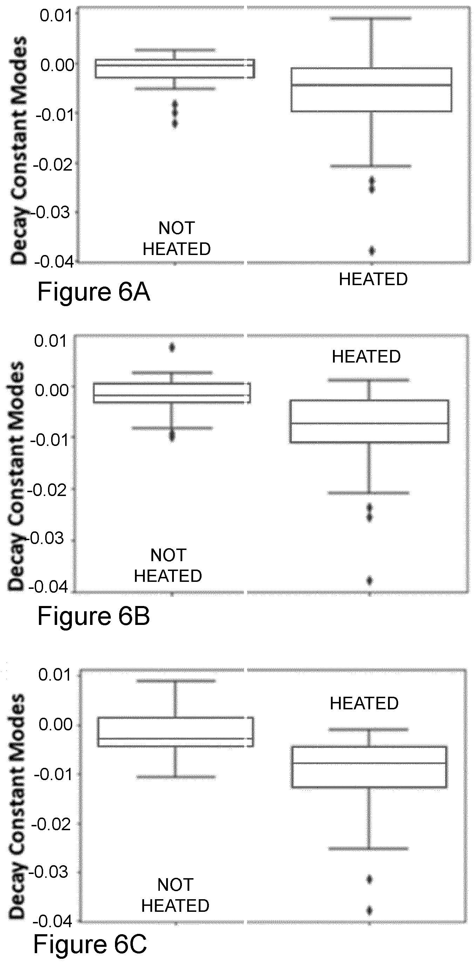

A specific example implementation of the first aspect of the method is described below. As discussed with respect to Figure 1, in practice, the method may further comprise performing the fatigue testing for the plurality of loading cycles. In one specific example the stages of the data processing required to predict fibre breakage include:
For each fibre sample:
   1. Data Acquisition using a commercial fatigue tester such as a Dia-Stron CYC801 or other similar system,
   2. Data Transfer to a suitable system such as a laptop computer;
   3. Data Processing using Python in Jupyter Notebook or any other Data processing system;
      3.1 Data visualisation (optional - The analysis can be run in batch mode without visualisation) and clean up.
      3.2 Prepare the data for each cycle:
         Find threshold in Force/Strain data.
         Find area under loading part of Force/Strain curve = 'Loading Area'.
      3.3 Construct response: Loading Area vs Number of Cycles
      3.4 Smooth the response data and take a local first derivative at each data point to give a decay constant. This is achieved using a Savitzky-Golay filter (signal.savgol_filter Python package, version 1.6.3, The SciPy community, https://docs.scipy.org/doc/scipy/reference/signal.html).
      3.5 Calculate the mode of the decay constant value across the data for this fibre (an example of mode calculation is discussed in further detail below with reference to figure 6).
      3.6 For Each Set of Data:
         Where one set of data comprises 40 values per fibre-treatment and there are at least two fibre-treatments;
         Compare data between pairs of fibre-treatments using the Mann-Whitney U test (scipy.stats.mannwhitneyu Python package, version 1.6.3, The SciPy community, https://docs.scipy.org/doc/scipy/reference/generated/scipy.stats.mannwhitneyu. html)

The above data analysis may involve thousands of data points for each of the several thousands of cycles.

A second aspect of the method, which includes determining an initial condition of the fibre sample, is discussed below with respect to Figure 4.

Figure 4 illustrates another example time series profile 400 of load area 404 against cycle number 406 of a similar type to that described previously with reference to Figure 3. In Figure 4, the data shows a lot of unexpected bumps 408 compared to the sample testing in Figure 3. As discussed previously, these bumps, or outliers, are understood to correspond to partial breakage events.

A number of erroneous data points 410 are also included in Figure 4 which are of no physical significance. These datapoints may be screened out of analysis by thresholding, for example.

Differences in the number of detected partial breakage events in the profile 400 of a fibre sample is understood to indicate that the fibre sample was in a different initial state, or initial condition, compared to the other fibre samples. By initial state, it is meant the state of the fibre before fatigue testing. The initial condition therefore includes the total past history of the fibre, including the effects of all grooming events and treatments prior to the measurement. Aspects of the initial condition may include fibre strength, integrity, physical damage (such as splits in the fibre) and moisture concentration, for example. The initial state can be representative of how much damage the fibre sample has received prior to the fatigue testing. An initially more intact fibre may be able to survive more partial breakage events before completely breaking. Therefore, a greater number of unexpected bumps 408 may represent a fibre with a less damaged initial state in which the fibre was initially more intact than a fibre that only gives a small number of bumps.

That is, a fibre showing more of the bumps 408 during data acquisition can be considered as being in a better initial state than one with fewer bumps. A fibre in a better initial state can therefore survive more small/partial breakage events during the experiment prior to the whole fibre breaking or weakening to a point where the loading energy reaches the threshold level.

The observation of the number of partial breakage events for a fibre provides an indicator of the initial state of the fibre that is not available from conventional testing. That is, in a conventional test the initial state of the fibre samples cannot be factored in and can lead to a range of measured values of fatigue for the fibre samples.

Therefore, by counting the number of partial breakage events (either to failure or up to a predetermined number of cycles, such as 100000), a measure of existing fibre damage defining the initial state of the fibre sample may be provided.

In this way, the number of partial breakage events detected in the data of Figure 3 or Figure 4 may be considered to provide the indication of the initial state of the fibre sample undergoing testing according to the second aspect of the method.

Figures 5 and 6 compare data obtained using conventional fatigue measuring experiments and the new method of figure 1. The samples used in the experiment were taken from the following hair types:
a) One tress of virgin blended medium brown Caucasian hair, and
b) One tress of heat treated (30 passes at 232°C (450 °F) using hair styling irons) blended medium brown Caucasian hair.

Virgin hair was supplied by International Hair Importers. For both hair types, samples were taken from tip ends of the fibre. There are therefore 2 sample types.

Fatigue testing was conducted at 80% relative humidity (80%RH) using a cyclic tester (Dia-Stron CYC801) in "constant stress mode". The fatiguing rate was set 60 mm/s and the number of cycles to break was measured at 80% relative humidity using a target stress of 105 MPa. Note that both force and stress were recorded in these experiments (stress = force/cross sectional area). However, because fatigue processes will change the effective cross section of the fibre (the active cross section of the fibre will decrease as a function of crack propagation), the analysis is carried out in terms of the force/strain curve. This also removes the necessity to correct the data using the gross fibre cross-section dimensions. This is legitimate in this application because we are studying the evolution of parameters between cycles for the same fibre. To calculate the stress, the dimensions of fibres were measured at 60% RH (at five points along the fibre).

Approximately 40 fibres were used in each experiment. Instrumental problems resulted in there being fewer data sets for some of the cells of the experiment. Also, because of a limitation on the quantity of data that can be saved during one experiment, some fibres (those requiring a very large numbers of cycles to break) had to be re-run, resulting in more than one data file per fibre.

Figure 5 shows the results of a 'cycles to break' experiment comparing virgin hair samples vs hair samples that have been heat treated. In both cases the hair was taken from the tip end of the switch.

Figure 6 shows results of applying the analysis method described previously with reference to Figures 1 to 4 to A) the full data set (all of the cycles to break data), B) the First 100 data points, and C) the First 50 data points.

As is appreciable from a comparison of Figures 5 and 6, there is a similar qualitative change in the fatigue performance of the hair in both the heated and not heated conditions using the classical and new analysis methods.

The results in Figures 6A to 6C also show that good discrimination between the samples can be achieved for all three data sets. Hence, satisfactory results can be obtained using only the first 50 data points, for example. This represents a 7-fold reduction in the quantity of data required to obtain the experimental results shown in Figure 6C compared to the conventional fatigue measurement described with reference to Figure 5.

The data processing steps for preparing Figure 6 are discussed below. The first derivative has been calculated for each time point, as previously described. The resulting data have been formed into a histogram of counts vs value of first derivative. In this example, 100 bins have been used for the values of the first derivative, although this could be varied. The bin with the greatest number of counts has been determined and the mid-point of that bin has been assigned to the decay constant. This process has been carried out for each fibre in the set to give a distribution of modes of the decay constant for each fibre set. The histogram is obtained using matplotlib.pyplot.hist, a Python package (see https://matplotlib.org/stable/api/_as_gen/matplotlib.pyplot.hist.html). The maximum of the histogram is found using the numpy.argmax Python package (see https://numpy.org/doc/stable/reference/generated/numpy.argmax.html).

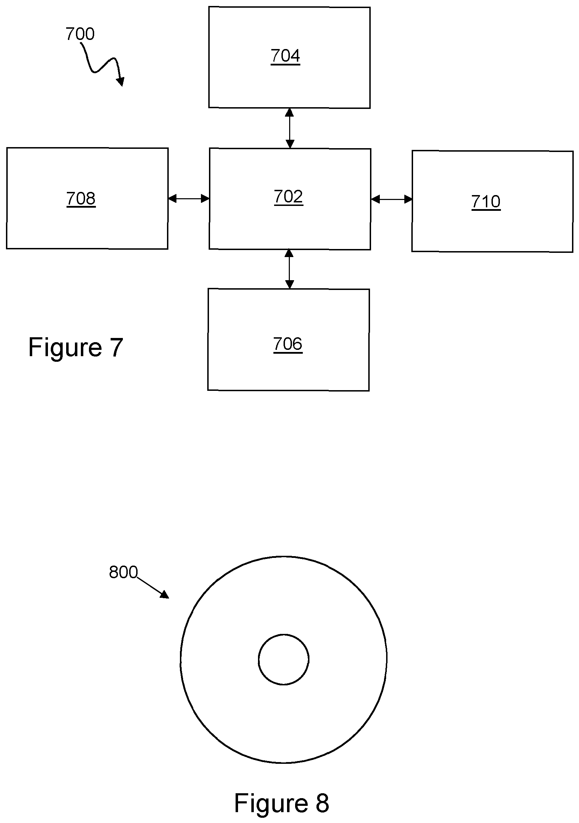

Figure 7 illustrates a schematic block diagram of a system 700 which may be used to implement the methods described previously. The system 700 comprises one or more processors 702 in communication with memory 704. The memory 704 is an example of a computer readable storage medium. The one or more processors 702 are also in communication with one or more input devices 706 and one or more output devices 708. The various components of the system 700 may be implemented using generic means for computing known in the art. For example, the input devices 706 may comprise a keyboard or mouse and the output devices 708 may comprise a monitor or display, and an audio output device such as a speaker. In addition, the system 700 comprises a fatigue testing apparatus, which may be conventional, such that the fatigue testing apparatus 710 is at least partially under the control of the one or more processors 702.

Figure 8 discloses a non-transitory computer readable storage medium 800. The non-transitory computer readable storage medium comprises computer program code configured to cause a processor to perform a method disclosed herein.

Carrying out the calculations using a computer, the calculations can be conducted faster than the corresponding cycles-to-break experiment, thereby allowing for faster testing of fibre samples. It also allows the possibility of processing in real time i.e., processing the data from each fatigue cycle immediately after acquisition. This would allow quality control to be implemented during the experiment. This could also lead to intelligent stopping of the experiment once the data indicated that some pre-defined level of quality and consistency has been achieved. This approach could lead to further time saving. For example, the method may further comprise halting an automated testing schedule for a particular sample in response to determining that the indication of fatigue meets a pre-determined value. In some examples halting the testing schedule includes stopping any additional loading cycles from being applied to the fibre sample.

## Claims

1. A method of evaluating fatigue in a hair fibre sample, the method comprising:
receiving fatigue testing data for the fibre sample from a plurality of loading cycles of applying and removing a load to the fibre sample in a fatigue test, in which the fatigue testing data comprises force or stress against displacement or strain data;
determining, for at least a subset of the cycles, a loading energy based on force or stress against displacement or strain data from the fatigue testing data; and
determining an indication of fatigue in the fibre sample based on the loading energy of the at least a subset of the cycles.

2. The method of claim 1, in which determining an indication of rate of fatigue comprises determining a rate of change of the loading energy with respect to the number of cycles.

3. The method of claim 2, in which the rate of change of the loading energy is based on smoothed values of the loading energy for the plurality of cycles.

4. The method of claim 2 or claim 3, in which the indication of rate of fatigue is determined based on initial loading cycles in which the initial loading cycles comprise fewer than one of: 10000, 20000 or 50000 cycles.

5. The method of claim 2 or claim 3, in which the indication of rate of fatigue is determined based on initial loading cycles, in which the number of loading cycles to provide the initial loading cycles is determined by the rate of change of the initial slope of the loading energy with respect to the number of cycles reaching a threshold value.

6. The method of claim 1, further comprising determining an indication of initial condition of the fibre sample based on a number of maxima in the loading energy with respect to the number of cycles.

7. The method of any preceding claim, in which the loading energy of a cycle is determined by integrating force / stress over displacement / strain for the loading portion of that cycle.

8. The method of claim 7, in which determining the indication of fatigue further comprises integrating force or stress over displacement or strain of the unloading part of that cycle to determine the energy lost within that cycle.

9. The method of any preceding claim, comprising performing the plurality of loading cycles of the fatigue test by performing an automated testing schedule;
halting the automated testing schedule for a sample in response to the determining that the indication of fatigue meets a pre-determined value.

10. A computer readable storage medium comprising computer program code configured to, when in use, cause a processor to perform the method of any of claims 1 to 9.

11. A fatigue testing apparatus comprising a controller configured to, when in use, perform the method of claim 10.

## Patentansprüche

1. Verfahren zum Beurteilen einer Ermüdung in einer Haarfaserprobe, wobei das Verfahren umfasst:
Empfangen von Ermüdungstestdaten für die Faserprobe von mehreren Belastungszyklen des Aufbringens und Entfernens einer Last auf die Faserprobe in einem Ermüdungstest, wobei die Ermüdungstestdaten Daten zur Kraft oder zur Spannung gegen Verschiebung oder zur Dehnung umfassen;
Bestimmen für mindestens eine Untergruppe der Zyklen einer Belastungsenergie anhand von Daten zur Kraft oder zur Spannung gegen Verschiebung oder zur Dehnung aus den Ermüdungstestdaten; und
Bestimmen einer Angabe einer Ermüdung in der Faserprobe anhand der Belastungsenergie der mindestens einen Untergruppe der Zyklen.

2. Verfahren nach Anspruch 1, wobei das Bestimmen einer Angabe einer Ermüdungsrate umfasst, eine Änderungsrate der Belastungsenergie in Bezug auf die Anzahl der Zyklen zu bestimmen.

3. Verfahren nach Anspruch 2, wobei die Änderungsrate der Belastungsenergie auf geglätteten Werten der Belastungsenergie für die mehreren Zyklen beruht.

4. Verfahren nach Anspruch 2 oder Anspruch 3, wobei die Angabe der Ermüdungsrate anhand anfänglicher Belastungszyklen bestimmt wird, wobei die anfänglichen Belastungszyklen weniger als eines von: 10000, 20000 oder 50000 Zyklen umfassen.

5. Verfahren nach Anspruch 2 oder Anspruch 3, wobei die Angabe der Ermüdungsrate anhand anfänglicher Belastungszyklen bestimmt wird, wobei die Anzahl von Belastungszyklen, um die anfänglichen Belastungszyklen bereitzustellen, durch die Änderungsrate des anfänglichen Anstiegs der Belastungsenergie in Bezug auf die Anzahl von Zyklen, die einen Schwellenwert erreichen, bestimmt wird.

6. Verfahren nach Anspruch 1, das ferner umfasst, eine Angabe einer Anfangsbedingung der Faserprobe anhand einer Anzahl der Maxima in der Belastungsenergie in Bezug auf die Anzahl der Zyklen zu bestimmen.

7. Verfahren nach einem vorhergehenden Anspruch, wobei die Belastungsenergie eines Zyklus durch Integrieren der Kraft bzw. der Spannung gegen Verschiebung bzw. der Dehnung über den Abschnitt der Belastung dieses Zyklus bestimmt wird.

8. Verfahren nach Anspruch 7, wobei das Bestimmen der Angabe einer Ermüdung ferner das Integrieren der Kraft oder der Spannung gegen Verschiebung oder der Dehnung über den Abschnitt der Entlastung dieses Zyklus umfasst, um die Energie zu bestimmen, die innerhalb dieses Zyklus verloren wird.

9. Verfahren nach einem vorhergehenden Anspruch, das umfasst: Ausführen der mehreren Belastungszyklen des Ermüdungstests durch Ausführen eines automatisierten Testplans; und
Anhalten des automatisierten Testplans für eine Probe in Reaktion auf das Bestimmen, dass die Angabe der Ermüdung einen vorgegebenen Wert erreicht.

10. Computerlesbares Speichermedium, das einen Computerprogrammcode umfasst, der dann, wenn er ausgeführt wird, konfiguriert ist, zu bewirken, dass ein Prozessor das Verfahren nach einem der Ansprüche 1 bis 9 ausführt.

11. Ermüdungstestvorrichtung, die eine Steuereinheit umfasst, die konfiguriert ist, dann, wenn sie ausgeführt wird, das Verfahren nach Anspruch 10 auszuführen.

## Revendications

1. Procédé pour évaluer la fatigue dans un échantillon de fibre capillaire, le procédé comprenant :
la réception de données de test de fatigue pour l'échantillon de fibre à partir d'une pluralité de cycles de charge dans lesquels une charge est appliquée à l'échantillon de fibre et retirée de celui-ci dans un test de fatigue, lesquelles données de test de fatigue comprennent la force ou la contrainte contre un déplacement ou des données de déformation ;
la détermination, pour au moins un sous-ensemble des cycles, de l'énergie de charge sur la base de la force ou de la contrainte contre un déplacement ou des données de déformation issues des données de test de fatigue ; et
la détermination d'une indication de fatigue dans l'échantillon de fibre sur la base de l'énergie de charge de l'au moins un sous-ensemble des cycles.

2. Procédé selon la revendication 1, dans lequel la détermination d'une indication de taux de fatigue comprend la détermination du taux de changement de l'énergie de charge relativement au nombre de cycles.

3. Procédé selon la revendication 2, dans lequel le taux de changement de l'énergie de charge est basé sur des valeurs lissées de l'énergie de charge pour la pluralité de cycles.

4. Procédé selon la revendication 2 ou la revendication 3, dans lequel l'indication de taux de fatigue est déterminée sur la base de cycles de charge initiaux, dans lequel les cycles de charge initiaux comprennent moins de l'un parmi : 10 000, 20 000 et 50 000 cycles.

5. Procédé selon la revendication 2 ou la revendication 3, dans lequel l'indication de taux de fatigue est déterminée sur la base de cycles de charge initiaux, dans lequel le nombre de cycles de charge pour fournir les cycles de charge initiaux est déterminé par le taux de changement de la pente initiale de l'énergie de charge relativement au nombre de cycles atteignant une valeur seuil.

6. Procédé selon la revendication 1, comprenant en outre la détermination d'une indication de condition initiale de l'échantillon de fibre sur la base du nombre de maxima de l'énergie de charge relativement au nombre de cycles.

7. Procédé selon l'une quelconque des revendications précédentes, dans lequel l'énergie de charge d'un cycle est déterminée par intégration de la force / de la contrainte au déplacement / de la déformation pour la partie charge de ce cycle.

8. Procédé selon la revendication 7, dans lequel la détermination de l'indication de fatigue comprend en outre l'intégration de la force ou de la contrainte au déplacement ou de la déformation de la partie non charge du cycle pour que soit déterminée la perte d'énergie à l'intérieur de ce cycle.

9. Procédé selon l'une quelconque des revendications précédentes, comprenant la réalisation de la pluralité de cycles de charge du test de fatigue par réalisation d'un programme de test automatisé ;
l'arrêt du programme de test automatisé pour un échantillon en réponse à la détermination que l'indication de fatigue atteint une valeur prédéterminée.

10. Support de stockage lisible par ordinateur comprenant un code de programmation informatique configuré pour, lors de l'utilisation, amener un processeur à exécuter le procédé de l'une quelconque des revendications 1 à 9.

11. Appareil de test de fatigue comprenant un contrôleur configuré pour, lors de l'utilisation, exécuter le procédé de la revendication 10.
